# EUROPEAN PATENT SPECIFICATION

(11) **EP 2 885 109 B1**
(45) Date of publication and mention of the grant of the patent: **19.02.2020**
(21) Application number: 13829591.0
(22) Date of filing: 13.08.2013
(51) Int. Cl.: B24D 3/34, B24D 11/00, B24D 3/04, C09K 3/14

(54) **COATED ABRASIVE ARTICLE HAVING ALUMINA-ZIRCONIA ABRASIVE PARTICLES AND GLASS DILUENT PARTICLES**
BESCHICHTETER SCHLEIFARTIKEL MIT ALUMINIUMOXID-ZIRKONOXID-SCHLEIFPARTIKELN UND GLASVERDÜNNUNGSPARTIKELN
ARTICLE ABRASIF REVÊTU AYANT DES PARTICULES ABRASIVES D'ALUMINE-ZIRCONE ET DES PARTICULES DE DILUANT DE VERRE

(30) Priority: 17.08.2012 US 201261684362 P
(43) Date of publication of application: 24.06.2015
(73) Proprietor: 3M Innovative Properties Company, St. Paul, MN 55133-3427 (US)
(72) Inventor: PROVOW, Ronald, D., Saint Paul, Minnesota 55133-3427 (US); RAMBOSEK, Thomas, W., Saint Paul, Minnesota 55133-3427 (US)
(74) Representative: De Clercq & Partners
(86) International application number: PCT/US2013/054648
(87) International publication number: WO 2014/028437

(56) References cited:
- WO-A1-93/17831
- JP-B2- 4 567 970
- US-A- 4 541 842
- US-A- 5 496 386
- US-A- 5 840 090
- US-A1- 2002 026 752
- US-A1- 2008 236 051

## Description

### BACKGROUND

Coated abrasive articles having 100 percent commercial alumina-zirconia (AZ) abrasive particles or a mixture of AZ abrasive particles and aluminum oxide abrasive particles are known for use in applications having extremely high grinding pressures as discussed in U.S. patent 3,996,702. Fused AZ abrasive particles are known and sold under the trade name of NorZon by Saint-Gobain Abrasives. While these abrasive particles work well in certain applications where the value of the more expensive AZ particle can be realized, there is a need for a less expensive coated abrasive article using an AZ abrasive particle.

Document US 5 840 909 A discloses a coated abrasive article comprising:
a backing having a make coat attaching AZ abrasive particles and non abrasive composite particles to the backing, the AZ abrasive particles and the non abrasive composite particles forming an abrasive layer;
a size coat applied over the AZ abrasive particles and the non abrasive composite particles

### SUMMARY

The inventors have discovered that the aluminum oxide particles from a blend of aluminum oxide /alumina-zirconia (AZ) abrasive particles can be entirely removed and replaced with a glass diluent particle. Surprisingly, the abrasive grinding performance exceeds that of the blend of aluminum oxide/AZ abrasive particles even though the Mohs hardness of the glass particle is only approximately 5.5 while the Mohs hardness of the replaced aluminum oxide particle is approximately 9. Thus, one would expect reduced grinding performance by replacing a harder aluminum oxide abrasive particle with a softer diluent glass particle. However, that was not what occurred. It is believed that this unexpected result may have occurred since the glass particles help to erectly support the AZ abrasive particles while easily eroding under grinding conditions to continually expose new AZ abrasive particle surfaces as the AZ abrasive particles fracture. This effect is believed to be more pronounced at lower grinding pressures such as Test Procedure 2. In contrast, it is believed that the harder aluminum oxide particles wear down creating a grinding flat that actually hinders the ability of the AZ abrasive particles to fracture under certain grinding conditions.

The invention resides in a coated abrasive article comprising a backing comprising a make coat attaching AZ abrasive particles and glass diluent particles to the backing; the AZ abrasive particles and the glass diluent particles forming an abrasive layer; and a size coat applied over the AZ abrasive particles and the glass diluent particles; characterized in that a size ratio between the average size of the glass diluent particles divided by the average size of the AZ abrasive particles is from 0.5 to 2.5; the abrasive layer comprises from 25 to 75 percent by weight AZ abrasive particles and from 75 to 25 percent by weight glass diluent particles, the abrasive layer has from 70 to 95 percent of a maximum closed coat construction of the AZ abrasive particles and glass diluent particles.

### BRIEF DESCRIPTION OF THE DRAWINGS

Repeated use of reference characters in the specification and drawings is intended to represent the same or analogous features or elements of the disclosure.
FIG. 1 a cross section of a coated abrasive article having AZ abrasive particles and glass diluent particles.
FIG. 2 is a graph of cutting performance for Test Procedure 3 of the Examples showing superior grinding performance to the 60/40 blend of AZ/aluminum oxide abrasive particles.
FIG. 3 is a graph of cutting performance for Test Procedure 4 of the Examples showing superior grinding performance to the 60/40 blend of AZ/aluminum oxide abrasive particles.

### DEFINITIONS

As used herein, variations of the words "comprise", "have", and "include" are legally equivalent and open-ended. Therefore, additional non-recited elements, functions, steps or limitations may be present in addition to the recited elements, functions, steps, or limitations.

### DETAILED DESCRIPTION

Coated abrasive articles typically have a backing substrate, abrasive grains, and a bonding system which operates to hold the abrasive grains to the backing. In a typical coated abrasive product, the backing is first coated with a layer of adhesive, commonly referred to as a "make coat", and then the abrasive grains and optional diluent particles are applied. The resulting adhesive/abrasive composite layer is then generally solidified or set enough to retain the abrasive grains to the backing, until a second layer of adhesive, commonly referred to as a "size coat", can be applied. The size coat further reinforces the coated abrasive product upon setting. Optionally, a "supersize coat", which may contain grinding aids, can be applied over the solidified size coat. Once the size coat and supersize coat, if used, has cured, the resulting coated abrasive product can be formed into a variety of convenient articles such as sheets, rolls, belts and discs.

The backing substrate used in coated abrasive products is typically chosen from paper, polymeric film, cloth, vulcanized fiber, nonwoven web, combinations thereof, or treated versions of these. Conventional bond systems typically comprise a glutinous or resinous adhesive such as hide glue, phenolic, epoxy, acrylate, melamine, urethane, urea-formaldehyde or mixtures thereof. Fillers are sometimes added to the adhesive to reduce the cost and to improve the cured resin's heat stability and hardness.

Blends of fused aluminum oxide abrasive particles and fused AZ abrasive particles can be used to reduce the cost of a coated abrasive article by replacing some of the fused AZ abrasive particles with the lower cost aluminum oxide particles. While aluminum oxide particles are reasonably priced compared to AZ abrasive particles, additional cost savings and environmental benefits can be achieved by replacing the aluminum oxide abrasive particles with glass and preferably with post secondary recycled glass. Post secondary recycled glass is quite inexpensive and its use in a coated abrasive article removes this waste stream from a landfill and diverts it to into a useful product form.

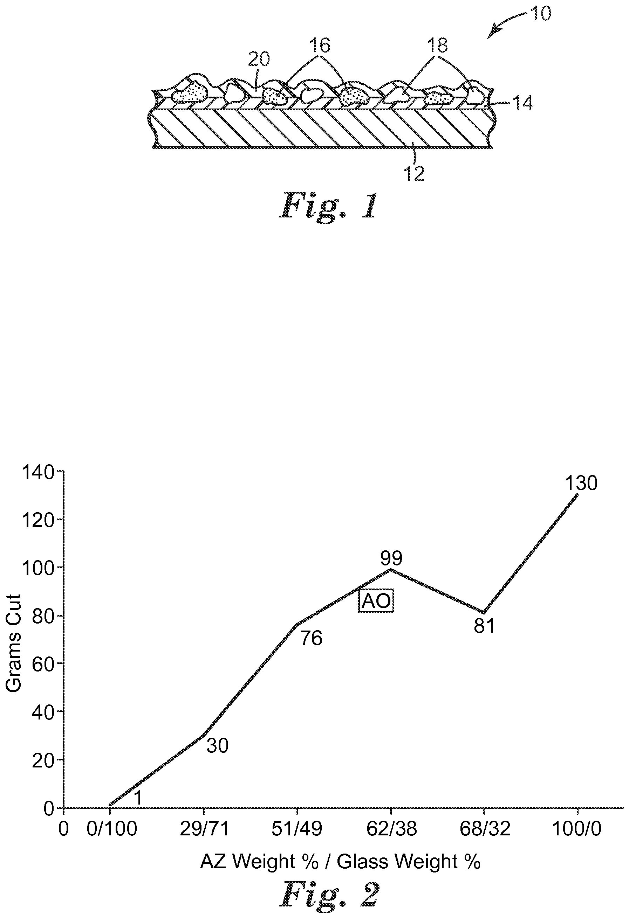

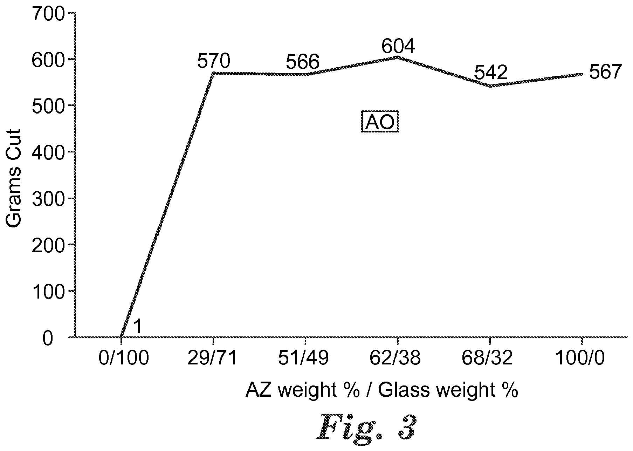

The incorporation of the nonabrasive glass diluent particles into the coated abrasive article having AZ abrasive particles surprisingly provides a coated abrasive article with unexpected abrading performance when compared to similar coated abrasive articles having 100 percent AZ abrasive particles or coated abrasive articles having a blend of AZ and aluminum oxide abrasive particles. Since the Mohs hardness of the glass is only approximately 5.5 while the Mohs hardness of the replaced aluminum oxide is approximately 9, one would expect reduced grinding performance by replacing the harder aluminum oxide abrasive particles with the softer diluent glass particles. However, that was not what occurred as shown in the Examples and illustrated in FIGS. 2 and 3. As seen in FIG. 2, the 62/38 weight percent blend of AZ abrasive particles and glass diluent particles had better grinding performance than the 60/40 blend of AZ abrasive particles and aluminum oxide particles labeled AO. As seen in FIG. 3, the weight percent blends of AZ abrasive particles and glass diluent particles from 29/71 to 68/32 all had better grinding performance than the 60/40 blend of AZ and aluminum oxide particles labeled AO and the 62/38 blend of AZ abrasive particles and glass diluent particles had better grinding performance than the 100 percent AZ abrasive disc.

Referring now to FIG. 1, a coated abrasive article 10 is illustrated. A backing 12 has applied to it a make coat 14 which secures the AZ abrasive particles 16 and the diluent glass particles 18 to the backing. A size coat 20 is then applied over both particles and both the make and size coats are fully cured. An optional supersize coat as previously mentioned can be applied over the size coat. Suitable materials for the backing, make coat resin, size coat resin, and optional supersize coat resin are known to those of skill in the art of coated abrasive articles and can be readily selected based on the intended use of the coated abrasive article. These materials and methods of making coated abrasive articles are also extensively discussed in numerous patents relating to coated abrasive articles available to the skilled coated abrasive article specialist.

When applying the AZ abrasive particles and the glass diluent particles, blends of the two particles can be applied together or sequential applications of each particle separately can be done by known methods such as electrostatic application or drop coating. FIG. 1 is more representative of drop coating as the particles in the abrasive layer are not standing up as would be expected from electrostatic coating. In one embodiment when sequentially applying the particles, the glass particles can be drop coated first followed by electrostatic coating of the AZ particles. It is believed that placing the glass diluent particles first onto the make layer in an open coat helps to support the erectly oriented, electrostatically applied AZ particles preventing them from tipping over until the make coat is partially cured thereby improving the grinding performance and breakdown of the AZ particles. Alternatively, the particles can be sequentially applied via a two-layer electrostatic deposition method as disclosed in U.S. patent publication number 2011/0289854 entitled "Layered Electrostatic Deposition Process For Making A Coated Abrasive Article".

Suitable fused AZ abrasive particles are available from various manufacturers such as Saint Gobain Abrasives, Treibacher Schleifmittel, and Washington Mills. In some embodiments, a 40% eutectic fused AZ material is preferred. In some embodiments, AZ abrasive particle grades of ANSI 12 (1842µm), 16 (1320 µm), 20 (905 µm), 24 (728 µm), 30 (630 µm), 36 (530 µm), 40 (420 µm), 50 (351 µm), 60 (264 µm), 80 (195 µm), 100 (141 µm), and 120 (116 µm) are preferred. In other embodiments, AZ abrasive particle grades of FEPA P12 (1746 µm), P16 (1320 µm), P20 (984 µm), P24 (728 µm), P30, (630 µm), P36 (530 µm), P40 (420 µm), P50 (326 µm), P60 (264 µm), P80 (195 µm), P100 (156 µm), and P120 (127 µm) are preferred. AZ abrasive particles graded according to ANSI or FEPA standards have been assigned average particle sizes for the purposes of this patent application as noted in the parenthesis behind each grade. The average particle sizes listed in parenthesis can be used to select suitable ranges for the AZ average particle sizes such as from 116 µm to 1842 µm, from 116 µm to 1746 µm, or from 195 µm to 630 µm by way of example only as other suitable ranges can be selected using any two listed particle sizes as end points. As the average size of the AZ particles become smaller, the improved grinding effect by the addition of glass diluent particles is believed to be much less.

Glass diluent particles can be made by crushing common industrial glass types such as soda-lime glass, lead glass, borosilicate glass, aluminosilicate glass, ninety-six percent silica glass, and fused silica glass. Often the glass diluent particles are soda-lime glass generally used for windows and food containers composed of 60-75 percent silicon dioxide, 12-18 percent sodium oxide, and 5-12 percent calcium oxide. From a cost and environmental perspective, desirably the glass is post secondary consumer recycled material. In one embodiment, the glass diluent particles were crushed recycled glass beer, wine, and pickle containers having 72-74 percent silicon dioxide, 10-11 percent calcium oxide, 13-14 percent sodium oxide, 1-2 percent aluminum oxide, and 1 percent or less of iron oxide, magnesium oxide, and potassium oxide.

It is believed the glass particles help to erectly support the AZ abrasive particles while easily eroding under grinding conditions to continually expose new AZ abrasive particle surfaces as the AZ abrasive particles fracture. As such, to maximize the grinding performance, the particle size of the glass diluents should not be so small such that they do not reinforce the AZ abrasive particles nor too large so as to hold the majority of the AZ particles completely away from the work piece. Application method of the glass diluents can affect particle size choice since the greatest dimension of the glass particle may be lying flat on the abrasive disc instead of standing up. In particular, the ratio of the average particle size of the glass diluent particles to the average particle size of the abrasive AZ particles should be from about 0.5 to about 2.5, or from about 0.75 to about 1.75, or from about 0.8 to about 1.3. Other size ratios may also work well in different grinding applications. In general, matching the size distribution of the glass diluent particles to the size distribution of the AZ abrasive particles is expected to provide the best grinding performance. However, in electrostatic particle application methods using a blend of the glass particles and AZ particles, the average sizes may need to be different due to differences in the density of the two particles to avoid favoring application of more of the lighter particles if both are of a similar size.

To determine the glass diluent particles' average size, a mass weighted average size based on Tyler sieve cuts can be used in accordance with FEPA Standard 43-GB-R1993. 100 grams of the crushed glass particles are screened though progressively smaller sieves or screens until all of the material has been captured on a particular sieve mesh or the pan. Since the size of the openings for the sieve that an individual particle last passed through and the size of the openings for the sieve the particle was retained on are known, the weight fraction of the particles retained on a particular sieve can be averaged with the weight fractions for the particles retained on the other sieve sizes to obtain an average particle size weighted by the mass of the original starting material (100 grams) retained on each sieve. The average glass particle size retained on a particular sieve is calculated as the average of the next larger sieve opening in the series of sieves specified, and the sieve opening the glass particle was retained on. For a nominal P36 grade, particles retained on the 1000 micron sieve would be assigned an average particle size corresponding to the average of the 1180 micron sieve and the 1000 micron sieve or 1090 microns and for particles retained in the pan it would be the average of 425 microns and zero or 212.5 microns.

For example, if 100 grams of glass diluent particles are screened using the P36 sieves, and 1.05 grams was retained on the 1000 micron sieve, 34.46 grams was retained on the 710 micron sieve, 22.39 grams was retained on the 600 micron sieve, 19.54 grams was retained on the 500 micron sieve, 18.35 grams was retained on the 425 micron sieve with 4.21 grams passing through to the pan, the average glass particle size is calculated to be 654 microns. The necessary math is shown in the following calculation: [(1180 + 1000)/2 ^{∗} (1.05/100)] + [(1000 + 710)/2 ^{∗} (34.46/100)] + [(710 + 600)/2 ^{∗} (22.39/100)] + [(600 + 500)/2 ^{∗} (19.54/100)] + [(500 + 425)/2 ^{∗} (18.35/100)] + [(425 + 0)/2 ^{∗} (4.21/100)] = 654.01 microns.

The necessary sieves and test procedures are defined in FEPA Standard 43-GB-R1993. In order to calculate the average particle size, the Sieve Selection Table is used to select the required sieves. The sieve defined as "O" (oversized) is used in the screening to measure the mass of particles retained on the next smaller sieve listed under the column labeled "1" in the Sieve Selection Table. If more than 5 percent of the starting material, or greater than 5 grams for 100 grams of starting material, is retained on the sieve listed in the column labeled "1" in the Sieve Selection Table, then the sample must be sieved using the next larger (coarser) set of sieves in the row immediately above in the table. Thus, a judgment of the expected average particle size is made, for example P36, the required sieves are used as listed in the row for P36 and if more than 5 grams out of the original 100 grams of starting material is retained on the 1000 micron sieve, a new sample is screened using the sieves for row P30. Conversely, if more than 10 percent of the starting material, or greater than 10 grams for 100 grams of starting material, passes through the sieve listed in the column labeled "5" in the Sieve Selection Table, then the sample must be sieved using the next smaller (finer) set of sieves in the row immediately below in the table. Thus, a judgment of the expected average particle size is made, for example P36, the required sieves are used as listed in the row for P36 and if more than 10 grams out of the original 100 grams of starting material passes through the 425 micron sieve, a new sample is screened using the sieves for row P40.

**Sieve Selection Table**

| Sieve order | O | 1 | 2 | 3 | 4 | 5 |
|---|---|---|---|---|---|---|
| P Grade | Sieve Aperture Size (microns) | Sieve Aperture Size (microns) | Sieve Aperture Size (microns) | Sieve Aperture Size (microns) | Sieve Aperture Size (microns) | Sieve Aperture Size (microns) |
| **P12** | 4.00 mm | 3.35 mm | 2.36 mm | 2.00 mm | 1.70 mm | 1.40 mm |
| **P16** | 3.35 mm | 2.36 mm | 1.70 mm | 1.40 mm | 1.18 mm | 1.00 mm |
| **P20** | 2.00 mm | 1.70 mm | 1.18 mm | 1.00 mm | 850 | 710 |
| **P24** | 1.70 mm | 1.40 mm | 1.00 mm | 850 | 710 | 600 |
| **P30** | 1.40 mm | 1.18 mm | 850 | 710 | 600 | 500 |
| **P36** | 1.18 mm | 1.00 mm | 710 | 600 | 500 | 425 |
| **P40** | 850 | 710 | 500 | 425 | 355 | 300 |
| **P50** | 710 | 600 | 425 | 355 | 300 | 250 |
| **P60** | 600 | 500 | 355 | 300 | 250 | 212 |
| **P80** | 425 | 355 | 250 | 212 | 180 | 150 |
| **P100** | 355 | 300 | 212 | 180 | 150 | 125 |
| **P120** | 250 | 212 | 150 | 125 | 106 | 90 |
| **P150** | 212 | 180 | 125 | 106 | 90 | 75 |
| **P180** | 180 | 150 | 106 | 90 | 75 | 63 |
| **P220** | 150 | 125 | 90 | 75 | 63 | 53 |

To determine the AZ abrasive particle's average size, the grading standards for the manufacturer should be referenced first and used as the average size number if disclosed. For example, a grade 36 AZ abrasive particle available from Saint-Gobain Abrasives under the trade name of NorZon has an average particle size of 536 µm according to the manufacturer. Secondly, if the manufacturer does not disclose the average size data, the average particle size is assigned based on the ANSI or FEPA grade claimed by the manufacturer for the particles using the average particle size number listed in parenthesis behind the ANSI or FEPA grade designation earlier in this patent specification. Thirdly, the AZ average particle size is determined by screen cuts in accordance with the method described above for determining the average particle size of the glass diluent particles if there is no ANSI or FEPA grade designation by the manufacturer. While there may be slight differences in the average particle size determined by each of these methods, such differences are not significant for the purposes of this invention. For example, the grade 36 NorZon AZ abrasive particles are disclosed by Saint Gobain Abrasives to have an average particle size of 536 µm; however, for the purposes of this patent specification, an ANSI grade 36 designation was assigned an average particle size of 530 µm. Since the manufacturer has disclosed an average particle size number, the 536 µm would be used instead of the 530 µm.

In the Examples, an abrasive disc having 100 percent AZ particles and an abrasive disc having 60 percent AZ particles and 40 percent aluminum oxide particles were tested as controls. It was found that to maximize the unexpected benefit of replacing the aluminum oxide with glass diluent particles, the weight percentages of the particles (AZ and glass) in the abrasive layer should be within certain ranges. In particular, the particle weight ranges for the abrasive layer having from 25 to 75 percent by weight AZ abrasive particles and from 75 to 25 percent by weight glass diluent particles, or from 50 to 70 percent by weight AZ abrasive particles and from 30 to 50 percent by weight glass diluent particles, or from 60 to 70 percent by weight AZ abrasive particles and from 40 to 30 percent by weight glass diluent particles have been found to grind particularly well as shown in the Examples and FIGS. 2 and 3.

To further maximize the grinding performance, the openness of the abrasive layer (abrasive particles and diluent particles) can be controlled. A closed coat is the maximum amount of particles (abrasive particles and diluent particles) that can be applied to the make resin and still stay attached during the application process until covered by the size coat. This maximum amount will vary depending on the sizes of the applied individual particles and their orientation on the abrasive layer. In the Examples, 880 gsm for an abrasive layer having 100 percent AZ abrasive particles was approximately a 100 percent closed coat. While 100 percent closed coat constructions can be useful, in general, abrasive layers having a blend of AZ abrasive particles and glass diluent particles will have from 70 to 95 percent, or from 85 to 95 percent, or about 90 percent of the closed coat construction of particles applied for the particular blend of the AZ abrasive particles and glass diluent particles weight ratio and average particle sizes.

### EXAMPLES

Objects and advantages of this disclosure are further illustrated by the following non-limiting examples. The particular materials and amounts thereof recited in these examples as well as other conditions and details, should not be construed to unduly limit this disclosure. Unless otherwise noted, all parts, percentages, ratios, etc. in the Examples are by weight. The coating weights of the make coat, the abrasive grains, and the size coat are all in grams per square meter unless otherwise specified.

**MATERIALS**

| **Abbreviation** | **Description** |
|---|---|
| AZ1 | alumina-zirconia abrasive particles, grade 36, obtained from Treibacher Schleifmittel North America, Inc. Niagara Falls, NY |
| AZ2 | alumina-zirconia abrasive particles, grade 60, obtained from Treibacher Schleifmittel North America, Inc. Niagara Falls, NY |
| GF1 | recycled glass particles, obtained as "3 Mix" from Strategic Materials, Houston, Texas. |
| GF2 | recycled glass particles, obtained as "Plate" from Strategic Materials, Houston, Texas. |
| AO1 | aluminum oxide abrasive particles, ANSI grade 36, obtained as "DURALUM G-52" from Washington Mills, Niagra, New York |
| AO2 | aluminum oxide abrasive particles, ANSI grade 60, obtained as "DURALUM G-52" from Washington Mills, Niagra, New York |

### Preparation Method For Grade 36 Abrasive Discs

Vulcanized fibre discs having a diameter of 7 inches (18 cm) and a 7/8 inch (2.2 cm) center hole were obtained under the trade designation "Dynos Fibre" from Troplast A.G., Troisdorf, Germany. Make resin consisting of 37 parts of a basic resole phenolic resin, 22.5 parts water and 40.5 parts calcium carbonate was applied by brush to an average weight of 176 gsm wet. The selected particle blend was then applied using a DC electrostatic coater to the desired mineral weight listed in Table 1 below. The make resin was thermally pre-cured in a batch oven for 90 minutes at 88 degrees C. The discs were then sized with a size resin consisting of 22 parts basic resole phenolic resin, 51 parts cryolite, 25 parts water and 2 parts red iron oxide to achieve an average coating weight of 285 gsm wet. The size resin was cured for 90 minutes at 88 degrees C followed by 10 hours at 103 degrees C. The discs were allowed to cool, orthogonally flexed over a 1.5 inch (38mm) diameter roll, stacked between boards and allowed to equilibrate at 50% relative humidity for at least 2 days before testing.

### Preparation Method For Grade 60 Abrasive Discs

Vulcanized fibre obtained under the trade designation "Dynos Fibre" from Troplast A.G., Troisdorf, Germany were coated with a make resin. The make resin consisting of 37 parts of a basic resole phenolic resin, 22.5 parts water and 40.5 parts calcium carbonate was applied by roll coater to an average weight of 163 gsm wet. The selected base mineral -40+ 80 GF or AO2 grade 60 dropped coated onto the wet web and AZ2 mineral was then applied using a DC electrostatic coater to the desired mineral weight and ratio listed in Table 1 below. The make resin was thermally pre-cured in a batch oven for 90 minutes at 88 degrees C. The rolls were then sized with a size resin consisting of 34 parts basic resole phenolic resin, 27 parts cryolite, 26 parts calcium carbonate, 11 parts of water, 1 part of titanium dioxide, and 1 part blue pigment to achieve an average coating weight of 230 gsm wet. The size resin was cured for 15 minutes at 79 degrees C, followed by 15 minutes at 85 degrees C, followed by 100 minutes at 91 degrees C, and then wound into a roll and cured for 30 minutes at 66 degrees C and then finished curing for 10.5 hours at 91 degrees C. The coated abrasive material was allowed to cool, discs were cut out and orthogonally flexed over a 1.5 inch (38 mm) diameter roll, stacked between boards, and allowed to equilibrate at 50% relative humidity for at least 2 days before testing.

### TEST METHODS

### Test Procedure 1

An automated grinding test was conducted on 7 inch (17.8 cm) fibre discs to evaluate the inventive coated abrasive constructions. The work piece was 1045 steel bars on which the surface to be abraded measured 0.75 inch by 0.75 inch (1.9 x 1.9 cm). An extra hard red ribbed backup pad (3M part # 051144-80514) was used. The disc was run at 5000 rpm. The work piece was applied to the periphery of the disc under a load of 15 pounds (6.8 kg). The test consisted of measuring the weight loss of the work piece every 12 seconds. The work piece was then cooled in water and tested again. The test was concluded when a total of 65 passes was complete or the cut rate (grams per 12 seconds) was 20% of initial cut rate. The total cut in grams was then recorded for each disc.

### Test Procedure 2

An automated grinding test was conducted on 7 inch (17.8 cm) fibre discs to evaluate inventive coated abrasive constructions. The work piece was 1045 steel bars on which the surface to be abraded measured 0.75 inch by 0.75 inch (.19 x 1.9 cm). An extra hard red ribbed backup pad (3M part # 051144-80514) was used. The disc was run at 5000 rpm. The work piece was applied to the periphery of the disc under a load of 10 pounds (4.5 kg). The test consisted of measuring the weight loss of the work piece every 12 seconds. The work piece would then be cooled in water and tested again. The test was concluded when a total of 70 passes was complete or the cut rate (grams per 12 seconds) was 20% of initial cut rate. The total cut in grams was then recorded for each disc.

### Test Procedure 3

Test Procedure 3 measured the amount of metal removed in 8 minutes of grinding at high grinding pressures. The test equipment included the coated abrasive disc attached to a hard black ribbed plastic backup pad (3M part # 051144-80515). The mounted test disc was rotated at 3500 rpm. A 25 cm diameter 1010 carbon steel disc-shaped work piece was placed into contact with the abrasive face of the abrasive disc under a load of 2.9 kg. The 4.0 mm peripheral edge of the work piece was deployed 18.5° from a position normal to the abrasive disc and rotated counter clockwise at 2 rpm. At the start and end of the test, the work piece was weighed to determine the amount of steel removed or abraded. The endpoint of the test was 8 minutes of grinding. The total cut was the amount of steel abraded during the entire test.

### Test Procedure 4

Test Procedure 4 was the same as Test Procedure 3 except that the angle was 10° rather and 18.5° and the load at the abrading interface was 3.3 kg. Each test specimen was tested for five 1-minute intervals for a total of 5 minutes.

### Examples 1-4 and Comparative Examples A-C

Examples 1 through 4 and Comparative Examples A-C were made to compare the performance of coated abrasive discs having various ratios of glass diluent particles to AZ abrasive particles to abrasive discs of the current art. Abrasive discs were prepared according to Preparation Method for Abrasive Discs according to the compositions shown in Table 1. The resulting discs were tested according to Test Procedures 1, 2, 3, and 4. The test results are shown in Table 1.

### Examples 5 - 7

Examples 5 through 7 were made identically to Example 1 with the exception that the compositions were adjusted to accommodate glass diluent particles of various sizes as shown in Table 2, which repeats the data for Example 1. For Examples 5 and 7, the amount of the smaller glass diluent particles was reduced (and the AZ increased) to prevent complete blocking of the make coating by lighter glass diluent particles. The abrasive discs were tested according to Test Procedures 1, 2, 3, and 4, and the test data are shown in Table 2.

### Examples 8-10 and Comparative Example D

Examples 8-10 and Comparative Example D were prepared to compare coated abrasive articles of various compositions comprising ANSI grade 60 abrasive particles, and were prepared identically to Example 1 with the exception that the particle coating was a sequence wherein the glass diluent particles (or aluminum oxide) was first drop coated, then the AZ particles were electrostatically coated onto the make coating. Examples 8-10 and Comparative Example D were tested according to Test Procedure 3 (that was modified to decrease the grinding time to 6 minutes). The compositions and test results are shown in Table 1.

**Table 1**

| **Example** | | **Composition** | | | | | | | | **Test Results, cut in grams** | | | |
|---|---|---|---|---|---|---|---|---|---|---|---|---|---|
| | **Total particle Wt, gsm** | **AZ1, wt%** | **AZ2, wt%** | **Glass Diluent particle** | | | | **AO1, Wt%** | **AO2,wt %** | **TP1** | **TP2** | **TP3** | **TP4** |
| | | | | **GF1 wt%** | **GF2 wt%** | **sieve cut (avg. size µm)** | **Size Ratio, glass:AZ** | | | | | | |
| Comp. A | 880 | 100 | 0 | 0 | 0 | NA | NA | 0 | 0 | 760 | 562 | 130 | 567 |
| 1 | 720 | 68 | 0 | 32 | 0 | -20+40 (654) | 1.22 | 0 | 0 | 763 | 559 | 81 | 542 |
| 2 | 685 | 62 | 0 | 38 | 0 | -20+40 (654) | 1.22 | 0 | 0 | 744 | 565 | 99 | 604 |
| 3 | 665 | 51 | 0 | 49 | 0 | -20+40 (654) | 1.22 | 0 | 0 | 725 | 545 | 76 | 566 |
| 4 | 580 | 29 | 0 | 71 | 0 | -20+40 (654) | 1.22 | 0 | 0 | 666 | 464 | 30 | 570 |
| Comp. B | 530 | 0 | 0 | 100 | 0 | -20+40 (654) | 1.22 | 0 | 0 | 0 | 0 | 1 | 1 |
| Comp. C | 795 | 60 | 0 | 0 | 0 | NA | NA | 40 | 0 | 608 | 486 | 87 | 459 |
| Comp. D | 460 | 0 | 60 | 0 | 0 | NA | NA | | 40 | | | 38 | |
| 8 | 385 | 0 | 64 | 36 | 0 | -40+80 (275) | 1.01 | 0 | 0 | | | 23 | |
| 9 | 410 | 0 | 67 | 33 | 0 | -40+80 (275) | 1.01 | 0 | 0 | | | 44 | |
| 10 | 430 | 0 | 72 | 28 | 0 | -40+80 (275) | 1.01 | 0 | 0 | | | 39 | |

**Table 2**

| **Example** | **Composition** | | | | | | | **Test Results, cut in grams** | | | |
|---|---|---|---|---|---|---|---|---|---|---|---|
| | **Total Particle wt, gsm** | **AZ1, wt%** | **Glass Frit** | | | | **AO1, wt%** | **TP1** | **TP2** | **TP3** | **TP4** |
| | | | **3 Mix, wt%** | **Plate, wt%** | **sieve cut (avg size, µm)** | **size ratio, glass:AZ** | | | | | |
| 5 | 585 | 83 | 17 | 0 | -40+80 (275) | 0.51 | 0 | 792 | 586 | 62 | 582 |
| 1 | 725 | 68 | 32 | 0 | -20+40 (654) | 1.22 | 0 | 763 | 559 | 81 | 542 |
| 6 | 705 | 68 | 32 | 0 | -10+30 (1171) | 2.19 | 0 | 756 | 504 | 94 | 654 |
| 7 | 580 | 83 | 0 | 17 | -40+80 (275) | 0.51 | 0 | 832 | 579 | 59 | 552 |

Other modifications and variations to the present disclosure may be practiced by those of ordinary skill in the art, without departing from the spirit and scope of the present disclosure, which is more particularly set forth in the appended claims. It is understood that aspects of the various embodiments may be interchanged in whole or part or combined with other aspects of the various embodiments. The preceding description, given in order to enable one of ordinary skill in the art to practice the claimed disclosure, is not to be construed as limiting the scope of the disclosure, which is defined by the claims and all equivalents thereto.

## Claims

1. A coated abrasive article (10) comprising:
a backing (12) comprising a make coat (14) attaching AZ abrasive particles (16) and glass diluent particles (18) to the backing (12), the AZ abrasive particles and the glass diluent particles forming an abrasive layer; and
a size coat (20) applied over the AZ abrasive particles (16) and the glass diluent particles (18);
wherein a size ratio between the average size of the glass diluent particles (18) divided by the average size of the AZ abrasive particles (18) is from 0.5 to 2.5,
the abrasive layer comprises from 25 to 75 percent by weight AZ abrasive particles (16) and from 75 to 25 percent by weight glass diluent particles (18),
the abrasive layer has from 70 to 95 percent of a maximum closed coat construction of the AZ abrasive particles and glass diluent particles.

2. The coated abrasive article (10) of claim 1, wherein the abrasive layer consists essentially of the AZ abrasive particles (16) and the glass diluent particles (18).

3. The coated abrasive article (10) of claims 1 or 2, wherein the glass diluent particles (18) comprise 60-75 percent silicon dioxide, 12-18 percent sodium oxide, and 5-12 percent calcium oxide.

4. The coated abrasive article (10) of claims 1, 2, or 3, wherein the AZ abrasive particles are selected from the group consisting of ANSI grade 12, 16, 20, 24, 30, 36, 40, 50, 60, 80, 100 and 120.

5. The coated abrasive article (10) of claims 1, 2, 3, or 4, wherein the size ratio between the average size of the glass diluent particles (18) divided by the average size of the AZ abrasive particles (16) is from 0.8 to 1.3.

6. The coated abrasive article (10) of claims 1, 2, 3, 4, or 5, wherein the abrasive layer comprises from 50 to 70 percent by weight AZ abrasive particles (16) and from 50 to 30 percent by weight glass diluent particles (18).

7. The coated abrasive article according to any of the preceding claims, wherein the size ratio between the average size of the glass diluent particles divided by the average size of the AZ abrasive particles is from 0.8 to 2.5.

## Patentansprüche

1. Ein beschichteter Schleifartikel (10), umfassend:
einen Träger (12) umfassend eine Aufbauschicht (14), die AZ-Schleifpartikel (16) und Glasverdünnungspartikel (18) auf dem Träger (12) anbringt, wobei die AZ-Schleifpartikel und die Glasverdünnungspartikel eine Schleifschicht bilden; und
eine Deckschicht (20), die über den AZ-Schleifpartikeln (16) und den Glasverdünnungspartikeln (18) aufgebracht ist;
wobei ein Größenverhältnis zwischen der durchschnittlichen Größe der Glasverdünnungspartikel (18) geteilt durch die durchschnittliche Größe der AZ-Schleifpartikel (18) von 0,5 bis 2,5 beträgt,
die Schleifschicht von 25 bis 75 Gewichtsprozent AZ-Schleifpartikel (16) und von 75 bis 25 Gewichtsprozent Glasverdünnungspartikel (18) umfasst,
die Schleifschicht 70 bis 95 Prozent eines maximalen geschlossenen Beschichtungsaufbaus der AZ-Schleifpartikel und Glasverdünnungspartikel aufweist.

2. Der beschichtete Schleifartikel (10) nach Anspruch 1, wobei die Schleifschicht im Wesentlichen aus den AZ-Schleifpartikeln (16) und den Glasverdünnungspartikeln (18) besteht.

3. Der beschichtete Schleifartikel (10) nach Anspruch 1 oder 2, wobei die Glasverdünnungspartikel (18) 60 bis 75 Prozent Siliziumdioxid, 12 bis 18 Prozent Natriumoxid und 5 bis 12 Prozent Calciumoxid umfassen.

4. Der beschichtete Schleifartikel (10) nach Anspruch 1, 2 oder 3, wobei die AZ-Schleifpartikel ausgewählt sind aus der Gruppe bestehend aus ANSI-Klasse 12, 16, 20, 24, 30, 36, 40, 50, 60, 80, 100 und 120.

5. Der beschichtete Schleifartikel (10) nach Anspruch 1, 2, 3 oder 4, wobei das Größenverhältnis zwischen der durchschnittlichen Größe der Glasverdünnungspartikel (18) geteilt durch die durchschnittliche Größe der AZ-Schleifpartikel (16) von 0,8 bis 1,3 beträgt.

6. Der beschichtete Schleifartikel (10) nach Anspruch 1, 2, 3, 4 oder 5, wobei die Schleifschicht von 50 bis 70 Gewichtsprozent AZ-Schleifpartikel (16) und von 50 bis 30 Gewichtsprozent Glasverdünnungspartikel (18) umfasst.

7. Der beschichtete Schleifartikel nach einem der vorhergehenden Ansprüche, wobei das Größenverhältnis zwischen der durchschnittlichen Größe der Glasverdünnungspartikel geteilt durch die durchschnittliche Größe der AZ-Schleifpartikel von 0,8 bis 2,5 beträgt.

## Revendications

1. Article abrasif revêtu (10) comprenant :
un support (12) comprenant une couche de formation (14) fixant des particules abrasives AZ (16) et des particules diluantes de verre (18) au support (12), les particules abrasives AZ et les particules diluantes de verre formant une couche abrasive ; et
une couche d'apprêt (20) appliquée sur les particules abrasives AZ (16) et les particules diluantes de verre (18) ;
dans lequel un rapport de taille entre la taille moyenne des particules diluantes de verre (18) divisée par la taille moyenne des particules abrasives AZ (18) va de 0,5 à 2,5,
la couche abrasive comprend de 25 à 75 pour cent en poids de particules abrasives AZ (16) et de 75 à 25 pour cent en poids de particules diluantes de verre (18),
la couche abrasive a de 70 à 95 pour cent d'une construction maximale de couche fermée des particules abrasives AZ et des particules diluantes de verre.

2. Article abrasif revêtu (10) selon la revendication 1, dans lequel la couche abrasive est constituée sensiblement des particules abrasives AZ (16) et des particules diluantes de verre (18).

3. Article abrasif revêtu (10) selon les revendications 1 ou 2, dans lequel les particules diluantes de verre (18) comprennent 60 à 75 pour cent de dioxyde de silicium, 12 à 18 pour cent d'oxyde de sodium, et 5 à 12 pour cent d'oxyde de calcium.

4. Article abrasif revêtu (10) selon les revendications 1, 2 ou 3, dans lequel les particules abrasives AZ sont choisies dans le groupe constitué des grades 12, 16, 20, 24, 30, 36, 40, 50, 60, 80, 100 et 120 de l'Institut national de normalisation américain, ANSI.

5. Article abrasif revêtu (10) selon les revendications 1, 2, 3 ou 4, dans lequel le rapport de taille entre la taille moyenne des particules diluantes de verre (18) divisée par la taille moyenne des particules abrasives AZ (16) va de 0,8 à 1,3.

6. Article abrasif revêtu (10) selon les revendications 1, 2, 3, 4 ou 5, dans lequel la couche abrasive comprend de 50 à 70 pour cent en poids de particules abrasives AZ (16) et de 50 à 30 pour cent en poids de particules diluantes de verre (18).

7. Article abrasif revêtu selon l'une quelconque des revendications précédentes, dans lequel le rapport de taille entre la taille moyenne des particules diluantes de verre divisée par la taille moyenne des particules abrasives AZ va de 0,8 à 2,5.
